# EUROPEAN PATENT SPECIFICATION

(11) **EP 3 929 014 B1**
(45) Date of publication and mention of the grant of the patent: **29.11.2023**
(21) Application number: 21175872.7
(22) Date of filing: 26.05.2021
(51) Int. Cl.: B60K 15/04, B62J 35/00

(54) **FUEL TANK CAP OF A STRADDLED VEHICLE**
KRAFTSTOFFTANKDECKEL EINES GRÄTSCHSITZFAHRZEUGS
BOUCHON DU RESERVOIR DE CARBURANT D'UN VÉHICULE À ENFOURCHER

(30) Priority: 23.06.2020 JP 2020107784
(43) Date of publication of application: 29.12.2021
(73) Proprietor: YAMAHA HATSUDOKI KABUSHIKI KAISHA, Iwata-shi, Shizuoka 438-8501 (JP)
(72) Inventor: TACHIBANA, Masumi, Shizuoka-ken, 4388501 (JP)
(74) Representative: Marks & Clerk LLP

(56) References cited:
- JP-A- 2013 123 930
- US-A1- 2006 288 748

## Description

### FIELD OF INVENTION

The present invention relates to a fuel filler cap and a straddled vehicle comprising a fuel filler cap.

### BACKGROUND TO INVENTION

A straddled vehicle is equipped with a fuel tank. For example, in a straddled vehicle of Publication of Japan Patent No. 5543451 (HUF HUKSBECK & FURST), a fuel filler port is provided on an upper surface of a fuel tank, and the fuel filler port is opened and closed by a cap. The cap is connected to a support via a hinge. An operating member is provided on the cap. A rider rotates the cap around the hinge by operating the operating member with a finger. As a result, the fuel filler port is opened.

In the straddled vehicle described above, the cap is exposed to the outside of the vehicle. In that case, water tends to collect on the cap due to rain or the like. Therefore, when the rider opens the fuel filler port and the cap tilts, the water accumulated on the cap may flow down from the cap and flow into the fuel tank from the fuel filler port.

It is an object of at least one embodiment of at least one aspect of the present invention to seek to obviate or at least mitigate one or more problems or disadvantages in the prior art.

An object of at least one embodiment of at least one aspect of the present invention is to seek to prevent the water accumulated on the cap from flowing into the fuel tank from the fuel filler port.

US 2006/288748 A1 (KAWASAKI HEAVY IND LTD) describes a tank cap for closing a fuel supply port of a fuel tank provided on an upper surface of the tank cap with a key hole and a cover covering the key hole. The cover opens and closes the key hole by making the cover swing via a support shaft. Finger catch concave portions are formed at least on both sides of the cover in an axial direction of the support shaft, and each of the finger catch concave portions is structured such that it is possible to insert a finger thereinto and to pinch both side edges in the axial direction of the cover by the inserted finger. Further, a leading end portion of the cover is preferably formed in a tapered shape in a plan view.

JP 2013/123930 A (MOLTEN CORP) describes a fuel filler lid device structured so that an outer box and an inner box are formed integrally with each other. The outer box includes a tubular body section where a filler box is fitted on an outer mounting section surrounding a fuel supply opening in an outer body of a vehicle body. The inner box includes a tubular body section of such a structure capable of being followed and
deformed by a plurality of stepped sections surrounding a fuel supply port disposed on vehicle more inner side than the fuel supply opening of a fuel supply pipe extending from a fuel tank. In addition, the inner box is formed from more highly flexible material than the outer box and hence the filler box can be installed to be followed on a plurality of vehicle models with different positions or angles of the fuel supply pipe relative to the fuel supply opening of a vehicle body.

### SUMMARY OF INVENTION

According to the present invention there is provided a fuel filler cap and/or a straddled vehicle with or having a fuel filler cap as claimed in the appended claims.

According to a first aspect of the present invention there is provided a fuel filler cap of a straddled vehicle, the straddled vehicle comprising a fuel tank including a fuel filler port, a support attached to the fuel tank and arranged around the fuel filler port, a hinge connected to the support, the fuel filler cap comprising:
a connecting portion attached to the support via the hinge;
an operating member that is attached to the cap and is operable by a rider;
a packing that is attached to a bottom surface of the cap and seals between the cap and a fuel filler port when the cap is located at a closed position;
a water guide that has a band shape, extends from the packing toward a connecting portion, and is arranged between the connecting portion and the fuel filler port when the cap is located at the open position, wherein
an upper surface of the cap is exposed to an outside of the vehicle,
the upper surface of the cap comprises or includes a recess extending towards the connecting portion, and
the operating member is arranged in the recess.

The cap may be configured to move between an open position and a closed position by rotating around the hinge, open the fuel filler port at the open position, and close the fuel filler port at the closed position.

According to a second aspect of the present invention there is provided a straddled vehicle comprising:
a fuel tank comprising or including a fuel filler port;
a support attached to the fuel tank and arranged around the fuel filler port;
a hinge connected to the support;
the fuel filler cap of the first aspect of the invention wherein the cap is movable between an open position and a closed position by rotating around the hinge, opening the fuel filler port at the open position, and closing the fuel filler port at the closed position.

In the straddled vehicle according to the present aspect, the recess for arranging the operating member is provided on the upper surface of the cap. Therefore, water tends to collect in the recess. However, when the cap is located at the open position, the water guide is arranged between the connecting portion and the fuel filler port. Therefore, even if water flows down from the recess toward the connecting portion, the water guide will suppress the inflow of water to the fuel filler port. As a result, it is possible to prevent the water accumulated on the cap from flowing into the fuel tank from the fuel filler port.

A width of the water guide may be greater than a width of the recess at the connecting portion. In this case, the large width of the water guide may further suppress the inflow of water to the fuel filler port.

The water guide may include a fixing portion that may be fixed to a lateral side of the cap. In this case, since the water guide is fixed to the cap, there may be little gap between the water guide and the cap. As a result, the inflow of water to the fuel filler port may be further suppressed.

The fixing portion may be located below the connecting portion when the cap is located at the closed position. In this case, the water guide can effectively prevent the water flowing down from the connecting portion.

The water guide may have a curved shape between the fixing portion and the bottom surface of the cap. In this case, the water guide may be arranged between the fixing portion and the bottom surface of the cap, so that the inflow of water can be further prevented.

The water guide may be formed integrally with the packing. In this case, the water guide may be easy to form.

The operating member may comprise or include a rotation shaft and an operating portion. The rotation shaft may be rotatably supported by the cap. The operating portion may have a tab shape. The operating portion may extend from the rotation shaft toward the connecting portion. In this case, water may tend to collect between the recess of the cap and the operating member. However, even if the water accumulated between the recess and the operating member flows down toward the connecting portion, the water guide may suppress the inflow of water to the fuel filler port.

The recess may comprise or include an inner side surface. The inner side surface may be arranged with a gap from a lateral side surface of the operating portion. In this case, water may tend to collect in the gap between the inner side surface of the recess and the operation portion. However, even if the water accumulated in the gap flows down toward the connecting portion, the water guide may suppress the inflow of water to the fuel filler port.

The recess may comprise or include a first bottom surface and a second bottom surface. The first bottom surface may support the operating portion. The second bottom surface may be located below the first bottom surface. The second bottom surface may be arranged with a gap with respect to the operating portion. In this case, it may be easy to insert a finger into the gap between the second bottom surface and the operating portion. As a result, good operability of the operating portion can be obtained. On the other hand, water may tend to collect in the gap between the second bottom surface and the operating portion. However, even if the water accumulated in the gap flows down toward the connecting portion, the water guide may suppress the inflow of water to the fuel filler port.

### BRIEF DESRIPTION OF DRAWINGS

One or more embodiments of the present invention will now be described, by way of example only, with reference to the accompanying drawings, which are:
**FIG. 1** a side view of a straddled vehicle according to an embodiment;
**FIG. 2** a top view of the straddled vehicle;
**FIG. 3** a perspective view of a fuel cap unit;
**FIG. 4** a perspective view of the fuel cap unit;
**FIG. 5** a cross-sectional view of a fuel tank and its surroundings;
**FIG. 6** is a perspective view of the fuel cap unit;
**FIG. 7** a perspective view of the fuel cap unit;
**FIG. 8** a perspective view of the fuel cap unit;
**FIG. 9** an exploded view of the fuel cap unit;
**FIG. 10** an enlarged view of an upper surface of a cap;
**FIG. 11** a perspective view of the cap;
**FIG. 12** a rear view of the cap;
**FIG. 13** a bottom view of the cap; and
**FIG. 14** a perspective view of a packing and a water guide.

### DETAILED DESCRIPTION OF DRAWINGS

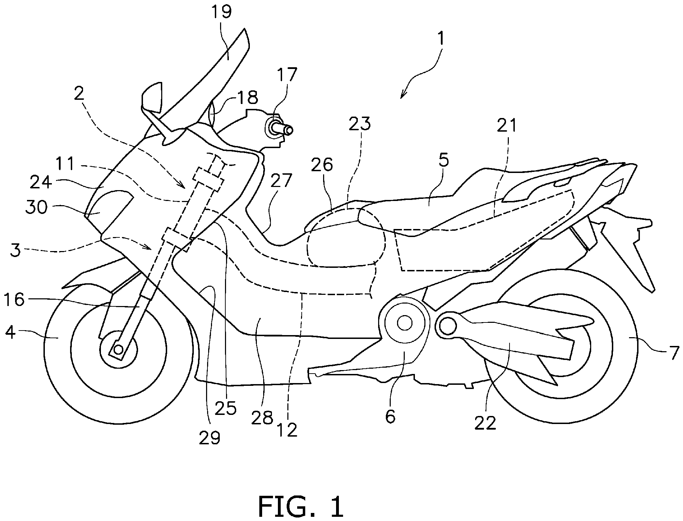

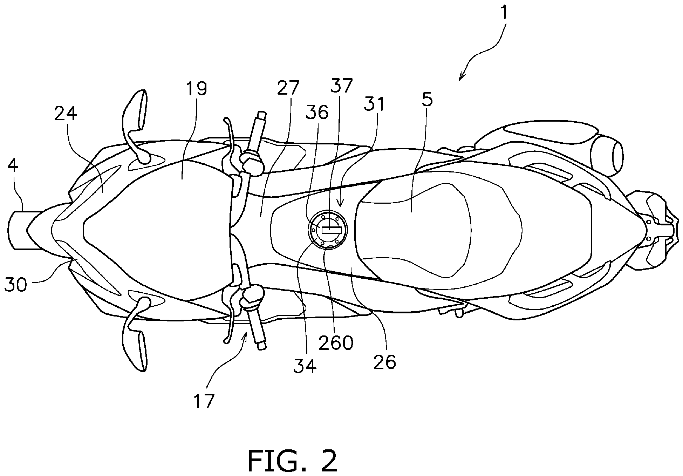

Hereinafter, a straddled vehicle according to an embodiment of the present invention will be described with reference to the drawings. FIG. 1 is a side view of the straddled vehicle 1 according to the embodiment. FIG. 2 is a top view of the straddled vehicle 1. The straddled vehicle 1 according to the present embodiment is a scooter. As illustrated in FIG. 1, the straddled vehicle 1 includes a vehicle body frame 2, a steering device 3, a front wheel 4, a seat 5, a power unit 6, and a rear wheel 7. In the following description, the front-rear, left-right directions are defined as the directions when viewed from a rider seated on the seat 5.

The vehicle body frame 2 includes a head pipe 11 and a main frame 12. The head pipe 11 is arranged at a center in the left-right direction of the vehicle. The head pipe 11 extends forward and downward. The main frame 12 extends rearward from the head pipe 11.

The steering device 3 is turnably supported by the head pipe 11. The steering device 3 rotatably supports the front wheel 4. The steering device 3 includes a front fork 16 and a handle member 17. The front fork 16 is turnably supported by the head pipe 11. The front wheel 4 is rotatably supported by the front fork 16.

The handle member 17 is operable by a rider to rotate the front wheel 4. The handle member 17 is connected to the front fork 16. The handle member 17 extends in the left-right direction. A meter panel 18 is arranged in front of the handle member 17. The meter panel 18 includes, for example, a speedometer. A windshield 19 is arranged in front of the meter panel 18.

The seat 5 is arranged behind the head pipe 11. The seat 5 is arranged above the main frame 12. A storage box 21 is arranged below the seat 5. The power unit 6 is arranged below the seat 5. The power unit 6 is arranged below the storage box 21. The power unit 6 includes an internal combustion engine. The power unit 6 is supported by the main frame 12. The rear wheel 7 is rotatably supported by a swing arm 22 is swingably supported by the main frame 12 or the power unit 6.

The straddled vehicle 1 includes a fuel tank 23. The fuel tank 23 is arranged between the head pipe 11 and the seat 5. The fuel tank 23 is arranged above the main frame 12. The fuel tank 23 is supported by the main frame 12. The head pipe 11 is arranged in front of the fuel tank 23. The seat 5 is located behind the fuel tank 23. The storage box 21 is arranged behind the fuel tank 23. The power unit 6 is arranged below the fuel tank 23.

The straddled vehicle 1 includes a front cover 24, a leg shield 25, a tank cover 26, a center cover 27, and a side cover 28. The front cover 24 is arranged in front of and on the left and right sides of the head pipe 11. A headlight 30 is arranged on the front cover 24. The leg shield 25 is arranged behind the front cover 24. A footrest 29 is arranged behind the leg shield 25. The footrest 29 has a flat shape and extends rearward from a lower portion of the leg shield 25.

The tank cover 26 covers the fuel tank 23 from above. The tank cover 26 overlaps with the fuel tank 23 as seen in the vehicle top view. The tank cover 26 is arranged in front of the seat 5. The tank cover 26 is arranged between the center cover 27 and the seat 5. The center cover 27 is arranged above the main frame 12. The center cover 27 is arranged between the head pipe 11 and the seat 5. The center cover 27 is arranged between the head pipe 11 and the tank cover 26. The center cover 27 has a shape recessed downward between the fuel tank 23 and the head pipe 11.

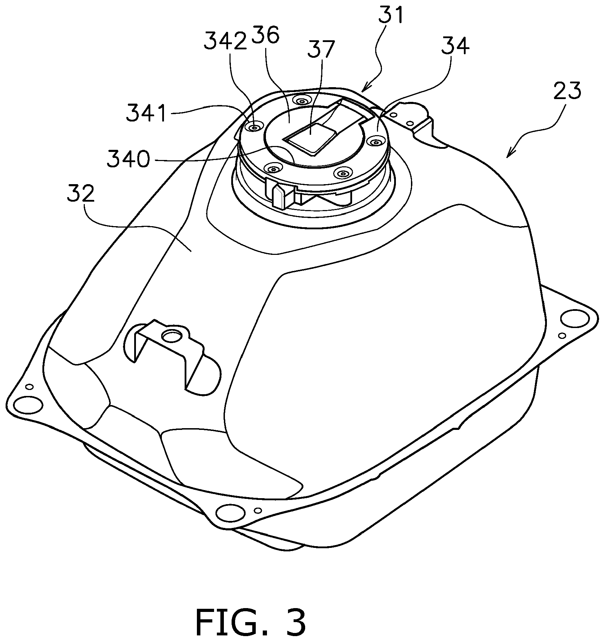

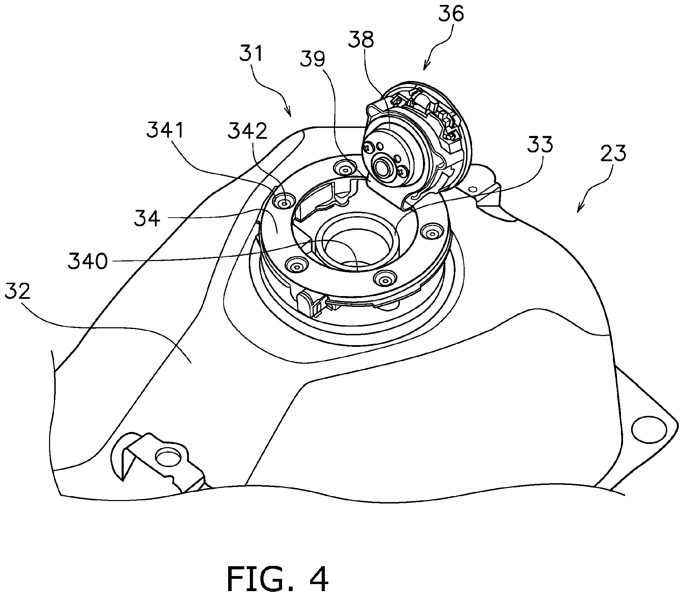

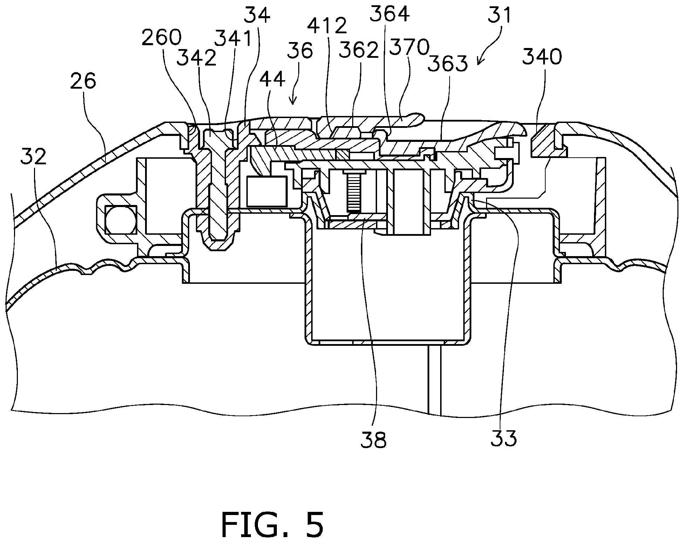

The side cover 28 is arranged below the seat 5. The side cover 28 covers at least a part of the power unit 6 from the lateral side. The footrest 29 is connected to a lower end of the side cover 28. The footrest 29 projects laterally from the side cover 28. The straddled vehicle 1 includes a fuel cap unit 31. FIGS. 3 and 4 are perspective views of the fuel cap unit 31. FIG. 5 is a cross-sectional view of the fuel tank 23 and its surroundings. As illustrated in FIGS. 4 and 5, the fuel tank 23 includes a tank body 32 and a fuel filler port 33. The tank body 32 has a space for storing fuel inside. The fuel filler port 33 is arranged on an upper surface of the tank body 32. The fuel filler port 33 is open upward. The fuel cap unit 31 is arranged above the fuel filler port 33. The fuel cap unit 31 opens and closes the fuel filler port 33.

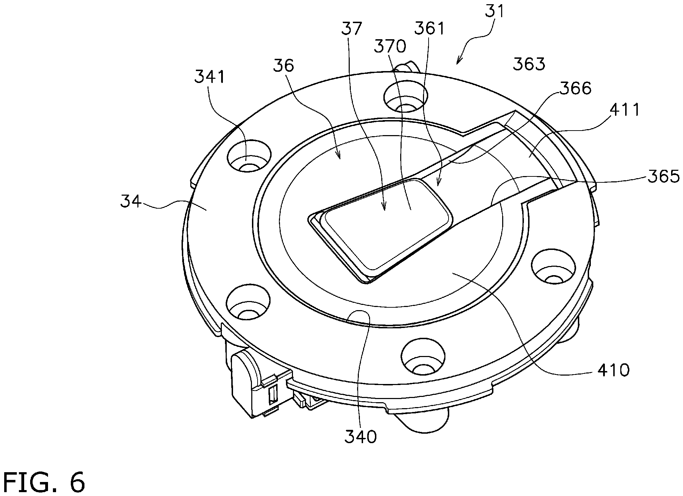

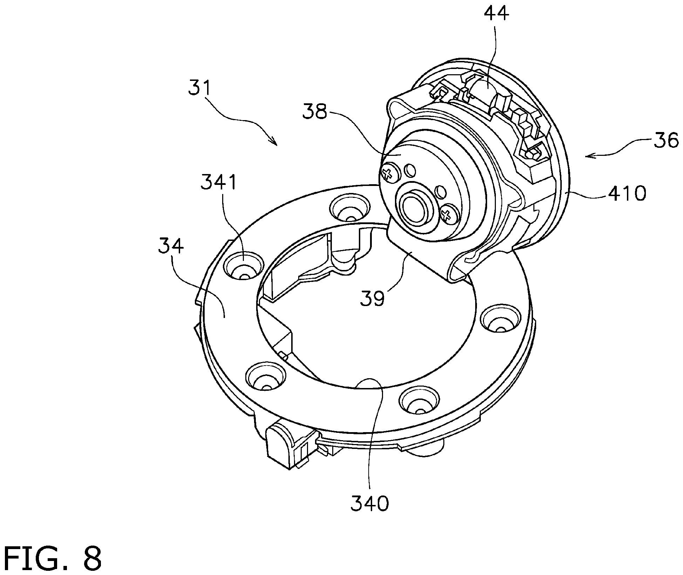

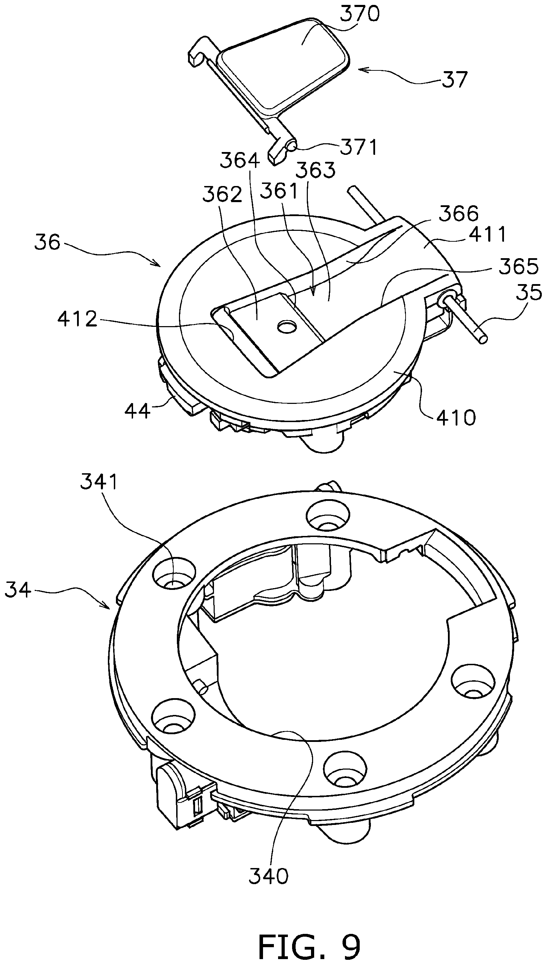

FIGS. 6 to 8 are perspective views of the fuel cap unit 31. FIG. 9 is an exploded view of the fuel cap unit 31. As illustrated in FIGS. 6 to 8, the fuel cap unit 31 includes a support 34, a hinge 35, a cap 36, and an operating member 37. The support 34 is attached to the fuel tank 23. The support 34 has an annular shape. The support 34 has a circular outer shape. The support 34 is arranged above the fuel tank 23. The support 34 has a circular opening 340 facing the fuel filler port 33. The support 34 is arranged around the fuel filler port 33.

The support 34 includes a plurality of holes 341. The plurality of holes 341 are arranged at intervals from each other in a circumferential direction of the support 34. In the drawings, only one of the plurality of holes 341 is designated by a reference numeral, and the other reference numerals are omitted. As illustrated in FIGS. 3 and 4, the support 34 is fixed to the fuel tank 23 by a fixing member 342 such as a bolt passed through the hole 341. As illustrated in FIG. 2, the tank cover 26 includes an opening 260. The support 34, the cap 36, and the operating member 37 are arranged in the opening 260 of the tank cover 26 and are exposed to the outside of the tank cover 26.

The hinge 35 is connected to the support 34 and the cap 36. The hinge 35 has a pin-like shape and extends in a vehicle width direction. The hinge 35 is arranged in front of the operating member 37. The hinge 35 rotatably supports the cap 36. The cap 36 is movably attached to the support 34 via the hinge 35 to an open position and a closed position. As illustrated in FIG. 3, the cap 36 closes the fuel filler port 33 at the closed position. As illustrated in FIG. 4, the cap 36 opens the fuel filler port 33 at the open position.

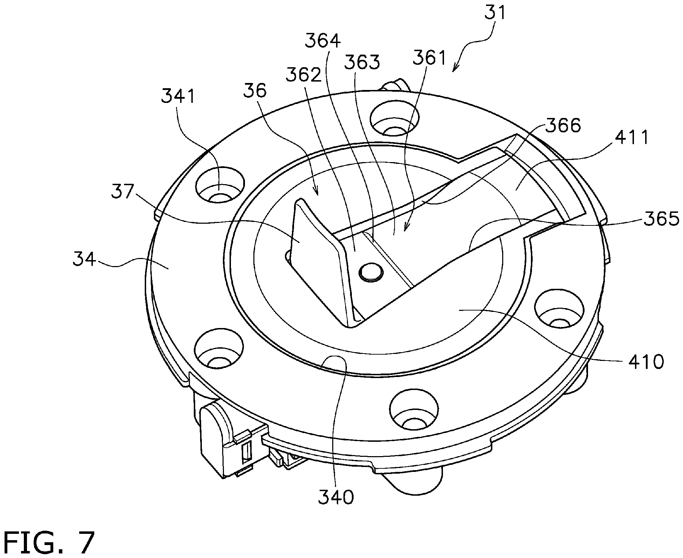

The operating member 37 is attached to the cap 36. The operating member 37 is operable by a rider. The operating member 37 is rotatably supported by the cap 36. As illustrated in FIG. 2, the operating member 37 and an upper surface of the cap 36 are exposed to the outside of the straddled vehicle 1. The operating member 37 is movable to a storage position illustrated in FIG. 6 and a deployed position illustrated in FIG. 7.

As illustrated in FIG. 9, the operating member 37 includes an operating portion 370 and a rotation shaft 371. The operating portion 370 has a tab shape. The operating portion 370 extends rearward from the rotation shaft 371. The operating portion 370 is operable by a rider. The operating portion 370 is arranged in recess 361. The rotation shaft 371 projects laterally from the operating portion 370. The operating member 37 is rotatably supported by the cap 36 around the rotation shaft 371.

The cap 36 includes a cap body 410, a connecting portion 411, and a slider 44. The cap body 410 has a circular shape that matches the opening 340 of the support 34. The cap body 410 includes a slit 412. The rotation shaft 371 of the operating member 37 is arranged in the cap 36 through the slit 412. The connecting portion 411 protrudes from the cap body 410. The connecting portion 411 extends rearward from the cap body 410. The hinge 35 is connected to the connecting portion 411.

The slider 44 is movably supported with respect to the cap body 410. The slider 44 moves to an engaged position and a disengaged position according to the rotation of the operating member 37. The slider 44 engages to the support 34 at the engaged position. As a result, the cap 36 is held in the closed position. The slider 44 does not engage to the support in the disengaged position. As a result, the cap 36 can be moved to the open position.

Recess 361 is provided on the upper surface of the cap 36. The operating member 37 is arranged in the recess 361. The recess 361 extends from a center of the upper surface of the cap 36 toward the connecting portion 411. The operating portion 370 is arranged at the center of the cap 36. The operating portion 370 extends from the rotation shaft 371 toward the connecting portion 411. The recess 361 includes a first bottom surface 362, a second bottom surface 363, a step portion 364, a first inner side surface 365, and a second inner side surface 366. The first bottom surface 362 is arranged at the center of the upper surface of the cap 36. The first bottom surface 362 is located between the slit 412 and the second bottom surface 363. The operating portion 370 is arranged above the first bottom surface 362. As seen in the top view, the first bottom surface 362 overlaps with the operating portion 370. The first bottom surface 362 supports the operating portion 370.

The second bottom surface 363 extends from the first bottom surface 362 to the connecting portion 411. A part of the second bottom surface 363 is located below the first bottom surface 362. The step portion 364 is located between the first bottom surface 362 and the second bottom surface 363. The operating portion 370 is arranged above the second bottom surface 363. As seen in the top view, the second bottom surface 363 overlaps with a tip end portion of the operating portion 370. As illustrated in FIG. 5, the second bottom surface 363 is arranged with a gap from the operating portion 370.

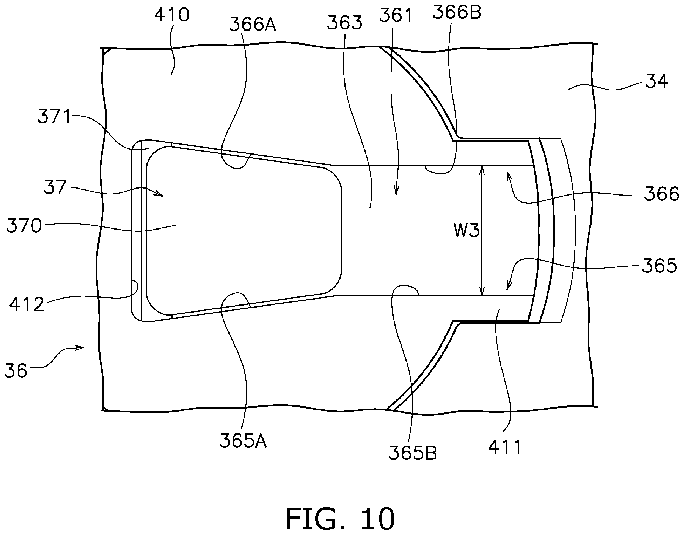

The first inner side surface 365 and the second inner side surface 366 extend upward from the first bottom surface 362 and the second bottom surface 363. As illustrated in FIG. 10, the first inner side surface 365 and the second inner side surface 366 extend in the front-rear direction. The first inner side surface 365 is arranged with a gap from one lateral side surface of the operating portion 370. The second inner side surface 366 is arranged with a gap from the other lateral side surface of the operating portion 370.

The first inner side surface 365 includes a first tapered portion 365A and a first straight portion 365B. The second inner side surface 366 includes a second tapered portion 366A and a second straight portion 366B. The first tapered portion 365A and the second tapered portion 366A extend upward from the first bottom surface 362. The first straight portion 365B and the second straight portion 366B extend upward from the second bottom surface 363. The first tapered portion 365A and the second tapered portion 366A are inclined so as to approach each other toward the connecting portion 411.

The first tapered portion 365A and the second tapered portion 366A face the operating portion 370. The operating portion 370 is arranged between the first taper portion 365A and the second taper portion 366A. A gap is provided between the first tapered portion 365A and the operating portion 370. A gap is provided between the second tapered portion 366A and the operating portion 370. The first straight portion 365B extends from the first tapered portion 365A to the connecting portion 411. The second straight portion 366B extends from the second tapered portion 366A to the connecting portion 411.

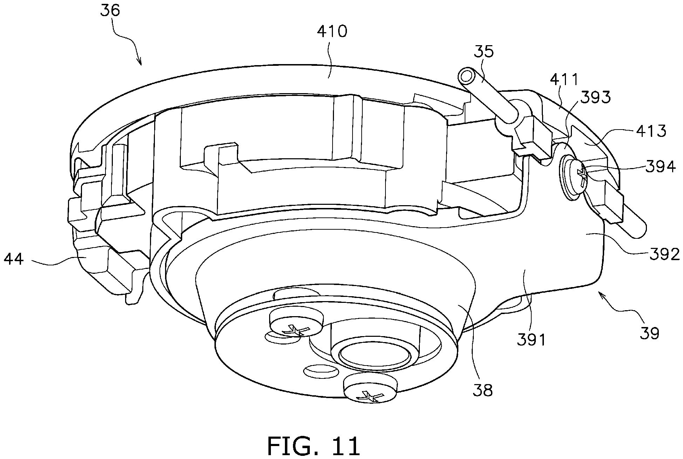

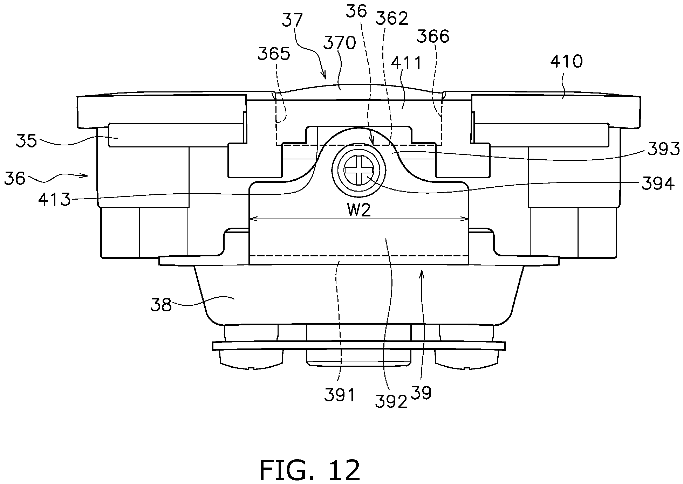

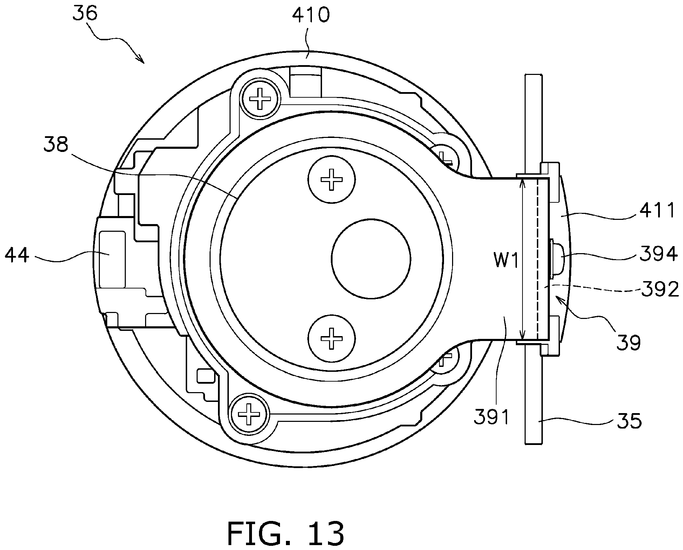

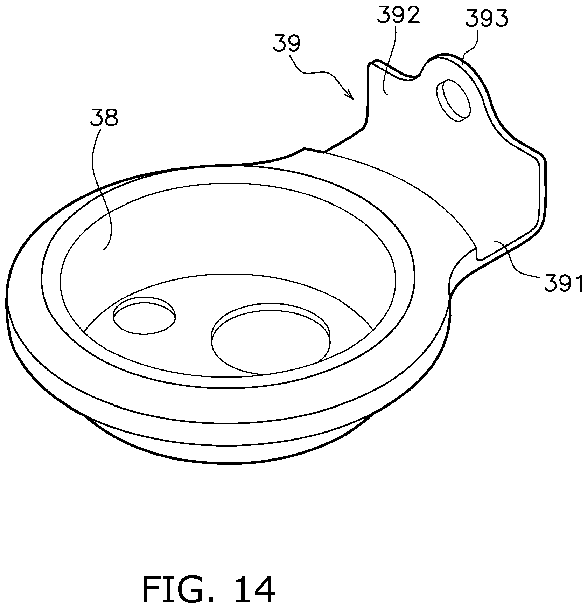

FIG. 11 is a perspective view of the cap 36. FIG. 12 is a rear view of the cap 36. FIG. 13 is a bottom view of the cap 36. As illustrated in FIGS. 11 to 13, the straddled vehicle 1 includes a packing 38 and a water guide 39. FIG. 14 is a perspective view of the packing 38 and the water guide 39. The packing 38 is attached to the bottom surface of the cap 36. The packing 38 is made of elastic material such as rubber. The packing 38 has a truncated cone shape. The packing 38 seals between the cap 36 and the fuel filler port 33 when the cap 36 is located at the closed position.

The water guide 39 extends from the packing 38 toward the connecting portion 411. The water guide 39 has a band shape. The water guide 39 is integrally formed with the packing 38. The water guide 39 is made of elastic material similar to the packing 38. The water guide 39 includes a first guide portion 391, a second guide portion 392, and a fixing portion 393. The first guide portion 391 is connected to the packing 38. The first guide portion 391 extends rearward from the packing 38. The first guide portion 391 extends from the packing 38 to below the connecting portion 411. As seen in the bottom view, a part of the first guide portion 391 overlaps with the connecting portion 411. A width W1 of the first guide portion 391 is larger than a width W3 of the recess 361 in the connecting portion 411. The width W1 of the first guide portion 391 is substantially the same as a width of the connecting portion 411. The width W1 of the first guide portion 391 may be smaller than the width of the connecting portion 411.

The second guide portion 392 extends upward from the first guide portion 391. The water guide 39 has a bent shape between the first guide portion 391 and the second guide portion 392. The second guide portion 392 is located below the connecting portion 411. The second guide portion 392 is arranged behind the cap 36. As seen in the bottom view, the second guide portion 392 overlaps with the connecting portion 411. As illustrated in FIG. 12, the second guide portion 392 overlaps with the cap 36 as seen in the rear view. A width W2 of the second guide portion 392 is larger than the width W3 of the recess 361 in the connecting portion 411. The width W2 of the second guide portion 392 is substantially the same as the width of the connecting portion 411. The width W2 of the second guide portion 392 may be smaller than the width of the connecting portion 411.

The fixing portion 393 is fixed to a rear surface of the cap 36. The water guide 39 has a curved shape between the fixing portion 393 and the bottom surface of the cap 36. The fixing portion 393 projects upward from the second guide portion 392. The fixing portion 393 is fixed to the cap 36 by a fixing member 394 such as a screw. The fixing portion 393 is located below the connecting portion 411 when the cap 36 is located at the closed position. As seen in the rear view, an upper end of the water guide 39 is located above a lower end of the connecting portion 411. At least a part of the fixing portion 393 is located above the lower end of the connecting portion 411. As illustrated in FIG. 12, a lower surface of the connecting portion 411 includes recess 413. The recess 413 has a shape that is recessed upward. A part of the fixing portion 393 is arranged in the recess 413.

In the straddled vehicle 1 according to the present embodiment, the packing 38 and the water guide 39 move together with the cap 36. The water guide 39 is arranged between the connecting portion 411 and the fuel filler port 33 when the cap 36 is located at the open position. Therefore, when the cap 36 moves from the closed position to the open position, even if water flows down from the recess 361 toward the connecting portion 411, the water guide 39 suppresses the inflow of water to the fuel filler port 33. As a result, it is possible to prevent the water accumulated on the cap 36 from flowing into the fuel tank 23 from the fuel filler port 33.

The straddled vehicle 1 is not limited to the scooter, and may be another type of vehicle such as a moped. The structure of the straddled vehicle 1 is not limited to that of the above embodiment, and may be changed. The number of front wheels is not limited to one, and may be more than one. The number of rear wheels is not limited to one, and may be more than one. The structure of the vehicle body frame 2 is not limited to that of the above embodiment, and may be changed. For example, the shape of the main frame 12 may be changed.

The structure of the fuel cap unit 31 is not limited to that of the above embodiment, and may be changed within the scope of the invention defined by the appended claims. For example, the shape of the support 34 may be changed. The shape of the cap 36 may be changed. The shape of the operating member 37 may be changed. The shape of the packing 38 may be changed. The water guide 39 may be provided separately from the packing 38.

### REFERENCE SIGNS LIST

33: Fuel filler port, 23: Fuel tank, 34: Support, 35: Hinge, 411: Connecting portion, 36: Cap, 37: Operating member, 38: Packing, 39: Water guide, 361: Recess, 393: Fixing portion, 371: Rotation shaft, 370: Operating portion, 365: First inner side surface, 362: First bottom surface, 363: Second bottom surface.

It will be appreciated that the embodiment(s) of the present invention hereinbefore described is/are given by way of example only, and is not intended to limit the scope of the invention in any way.

It will be appreciated that any of the features of any disclosed embodiment may be provided in combination with any of the features of the statements of invention given in the Summary of Invention and/or any of the other disclosed embodiments either individually or in combination, falling within the scope of the invention as disclosed by the appended claims.

It will be appreciated that the term 'straddled vehicle' or 'straddled motor vehicle' used herein, and as used in the art, is meant to include at least the following terms also used in the art:
straddled vehicle or motor vehicle, straddle-type vehicle or motor vehicle, saddle-straddling type vehicle or motor vehicle, and includes: motorcycles and motorbikes as well as straddled motor tricycles, quad bikes and straddled All Terrain Vehicles (ATVs), scooters, mopeds and snowmobiles.

## Claims

1. A fuel filler cap (36) for a straddled vehicle, the straddled vehicle comprising a fuel tank (23) including a fuel filler port (33), a support (34) attached to the fuel tank and arranged around the fuel filler port, a hinge (35) connected to the support, the fuel filler cap (36) comprising:
a connecting portion (411) attachable to the support via the hinge;
an operating member (37) that is attached to the cap and is operable by a rider or person;
a packing (38) that is attached to a bottom surface of the cap and seals between the cap and the fuel filler port when the cap is located at a closed position;
wherein
an upper surface of the cap is exposed to an outside of the vehicle,
the upper surface of the cap comprises or includes a recess (361) extending towards the connecting portion, and
the operating member is arranged in the recess, the fuel filler cap **characterized in that** it further comprises a water guide (39) that has a band shape and extends from the packing toward the connecting portion and is arranged between the connecting portion and the fuel filler port when the cap is located at an open position.

2. The fuel filler cap according to claim 1, wherein the cap is configured to move between the open position and the closed position by rotating around the hinge, open the fuel filler port at the open position, and close the fuel filler port at the closed position.

3. A straddled vehicle (1) comprising:
a fuel tank (23) comprising or including a fuel filler port (33);
a support (34) attached to the fuel tank and arranged around the fuel filler port;
a hinge (35) connected to the support;
a fuel filler cap (36) according to claim 1,
wherein the cap is configured to move between the open position and the closed position by rotating around the hinge, open the fuel filler port at the open position, and close the fuel filler port at the closed position.

4. The straddled vehicle according to claim 3, wherein a width (W1) of the water guide is larger than a width (W3) of the recess in the connecting portion.

5. The straddled vehicle according to claim 3 or 4, wherein the water guide comprises or includes a fixing portion (393) fixed to a lateral side surface of the cap.

6. The straddled vehicle according to claim 5, wherein the fixing portion is located below the connecting portion when the cap is located in the closed position.

7. The straddled vehicle according to claim 5 or 6, wherein the water guide has a curved shape between the fixing portion and the bottom surface of the cap.

8. The straddled vehicle according to any one of claims 3 to 7, wherein the water guide is integrally formed with the packing.

9. The straddled vehicle according to any one of claims 3 to 8, wherein the operating member comprises or includes:
a rotation shaft (371) rotatably supported by the cap, and
an operating portion (370) that has a tab shape and extends from the rotation shaft toward the connecting portion.

10. The straddled vehicle according to any one of claims 3 to 9, wherein the recess comprises or includes an inner side surface (365) arranged with a gap from a lateral side surface of the operating portion.

11. The straddled vehicle according to any one of claims 3 to 10, wherein the recess comprises or includes:
a first bottom surface (362) that supports the operating portion, and
a second bottom surface (363) located below the first bottom surface and arranged with a gap from the operating portion.

## Patentansprüche

1. Kraftstofftankverschluss (36) für ein Grätschsitzfahrzeug, wobei das Grätschsitzfahrzeug einen Kraftstofftank (23) einschließlich einer Kraftstoffeinfüllöffnung (33), eine am Kraftstofftank angebrachte und um die Kraftstoffeinfüllöffnung herum angeordnete Halterung (34), ein mit der Halterung verbundenes Scharnier (35) umfasst, wobei der Kraftstofftankverschluss (36) Folgendes umfasst:
einen Verbindungsabschnitt (411), der über das Scharnier an der Halterung angebracht werden kann;
ein Betätigungselement (37), das am Verschluss angebracht ist und von einem Fahrer oder einer Person betätigt werden kann;
eine Dichtung (38), die an einer Bodenfläche des Verschlusses angebracht ist und zwischen dem Verschluss und der Kraftstoffeinfüllöffnung abdichtet, wenn sich der Verschluss in einer geschlossenen Position befindet,
wobei
eine obere Fläche des Verschlusses zu einer Außenseite des Fahrzeugs hin exponiert ist,
die obere Fläche des Verschlusses eine Aussparung (361) umfasst oder einschließt, die sich in Richtung des Verbindungsabschnitts erstreckt, und
das Betätigungselement in der Aussparung angeordnet ist, wobei der Kraftstofftankverschluss **dadurch gekennzeichnet ist, dass** er ferner eine Wasserführung (39) umfasst, die eine Bandform aufweist und sich von der Dichtung in Richtung des Verbindungsabschnitts erstreckt und zwischen dem Verbindungsabschnitt und der Kraftstoffeinfüllöffnung angeordnet ist, wenn sich der Verschluss in einer offenen Position befindet.

2. Kraftstofftankverschluss nach Anspruch 1, wobei der Verschluss zum Bewegen zwischen der offenen Position und der geschlossenen Position durch Drehen um das Scharnier, zum Öffnen der Kraftstoffeinfüllöffnung in der offenen Position, und zum Schließen der Kraftstoffeinfüllöffnung in der geschlossenen Position konfiguriert ist.

3. Grätschsitzfahrzeug (1), das Folgendes umfasst:
einen Kraftstofftank (23), der eine Kraftstoffeinfüllöffnung (33) umfasst oder einschließt,
eine Halterung (34), die am Kraftstofftank angebracht und um die Kraftstoffeinfüllöffnung herum angeordnet ist;
ein Scharnier (35), das mit der Halterung verbunden ist;
einen Kraftstofftankverschluss (36) nach Anspruch 1,
wobei der Verschluss zum Bewegen zwischen der offenen Position und der geschlossenen Position durch Drehen um das Scharnier, zum Öffnen der Kraftstoffeinfüllöffnung in der offenen Position, und zum Schließen der Kraftstoffeinfüllöffnung in der geschlossenen Position konfiguriert ist.

4. Grätschsitzfahrzeug nach Anspruch 3, wobei eine Breite (W1) der Wasserführung größer ist als eine Breite (W3) der Aussparung in dem Verbindungsabschnitt.

5. Grätschsitzfahrzeug nach Anspruch 3 oder 4, wobei die Wasserführung einen Befestigungsabschnitt (393) umfasst oder einschließt, der an einer lateralen Seitenfläche des Verschlusses befestigt ist.

6. Grätschsitzfahrzeug nach Anspruch 5, wobei sich der Befestigungsabschnitt unterhalb des Verbindungsabschnitts befindet, wenn sich der Verschluss in der geschlossenen Position befindet.

7. Grätschsitzfahrzeug nach Anspruch 5 oder 6, wobei die Wasserführung eine gekrümmte Form zwischen dem Befestigungsabschnitt und der Bodenfläche des Verschlusses aufweist.

8. Grätschsitzfahrzeug nach einem der Ansprüche 3 bis 7, wobei die Wasserführung einstückig mit der Dichtung ausgebildet ist.

9. Grätschsitzfahrzeug nach einem der Ansprüche 3 bis 8, wobei das Betätigungselement Folgendes umfasst oder einschließt:
eine Drehwelle (371), die drehbar von dem Verschluss getragen wird, und
einen Betätigungsabschnitt (370), der die Form einer Lasche aufweist und sich von der Drehwelle in Richtung des Verbindungsabschnitts erstreckt.

10. Grätschsitzfahrzeug nach einem der Ansprüche 3 bis 9, wobei die Aussparung eine innere Seitenfläche (365) umfasst oder einschließt, die mit einem Spalt von einer lateralen Seitenfläche des Betätigungsabschnitts angeordnet ist.

11. Grätschsitzfahrzeug nach einem der Ansprüche 3 bis 10, wobei die Aussparung Folgendes umfasst oder einschließt:
eine erste Bodenfläche (362), die den Betätigungsabschnitt trägt, und
eine zweite Bodenfläche (363), die sich unterhalb der ersten Bodenfläche befindet und mit einem Spalt vom Betätigungsabschnitt angeordnet ist.

## Revendications

1. Bouchon de remplissage de carburant (36) pour un véhicule à enfourcher, le véhicule à enfourcher comprenant un réservoir de carburant (23) incluant un orifice de remplissage de carburant (33), un support (34) fixé au réservoir de carburant et agencé autour de l'orifice de remplissage de carburant, une articulation (35) raccordée au support, le bouchon de remplissage de carburant (36) comprenant :
une partie de connexion (411) pouvant être fixée au support par le biais de l'articulation ;
un élément d'actionnement (37) qui est fixé au bouchon et peut être actionné par un conducteur ou une personne ;
une garniture (38) qui est fixée à une surface inférieure du bouchon et scelle l'espace entre le bouchon et l'orifice de remplissage de carburant lorsque le bouchon est situé dans une position fermée ;
dans lequel
une surface supérieure du bouchon est exposée vers un extérieur du véhicule,
la surface supérieure du bouchon comprend ou inclut une cavité (361) s'étendant vers la partie de connexion, et
l'élément d'actionnement est agencé dans la cavité, le bouchon de remplissage de carburant étant **caractérisé en ce qu'**il comprend en outre un guide d'eau (39) en forme de bande et qui s'étend depuis la garniture vers la partie de connexion et est agencé entre la partie de connexion et l'orifice de remplissage de carburant lorsque le bouchon est situé dans une position ouverte.

2. Bouchon de remplissage de carburant selon la revendication 1, dans lequel le bouchon est configuré pour se déplacer entre la position ouverte et la position fermée en tournant autour de l'articulation, ouvrir l'orifice de remplissage de carburant dans la position ouverte, et fermer l'orifice de remplissage de carburant dans la position fermée.

3. Véhicule à enfourcher (1) comprenant :
un réservoir de carburant (23) comprenant ou incluant un orifice de remplissage de carburant (33) ;
un support (34) fixé au réservoir de carburant et agencé autour de l'orifice de remplissage de carburant ;
une articulation (35) reliée au support ;
un bouchon de remplissage de carburant (36) selon la revendication 1,
dans lequel le bouchon est configuré pour se déplacer entre la position ouverte et la position fermée en tournant autour de l'articulation, ouvrir l'orifice de remplissage de carburant dans la position ouverte, et fermer l'orifice de remplissage de carburant dans la position fermée.

4. Véhicule à enfourcher selon la revendication 3, dans lequel une largeur (W1) du guide d'eau est supérieure à une largeur (W3) de la cavité dans la partie de connexion.

5. Véhicule à enfourcher selon la revendication 3 ou 4, dans lequel le guide d'eau comprend ou inclut une partie de fixation (393) fixée à une surface de côté latérale du bouchon.

6. Véhicule à enfourcher selon la revendication 5, dans lequel la partie de fixation est située sous la partie de connexion lorsque le bouchon est situé dans la position fermée.

7. Véhicule à enfourcher selon la revendication 5 ou 6, dans lequel le guide d'eau présente une forme incurvée entre la partie de fixation et la surface inférieure du bouchon.

8. Véhicule à enfourcher selon l'une quelconque des revendications 3 à 7, dans lequel le guide d'eau est formé d'un seul tenant avec la garniture.

9. Véhicule à enfourcher selon l'une quelconque des revendications 3 à 8, dans lequel l'élément d'actionnement comprend ou inclut :
un arbre de rotation (371) supporté en rotation par le bouchon, et
une partie d'actionnement (370) qui présente une forme de languette et s'étend depuis l'arbre de rotation vers la partie de raccordement.

10. Véhicule à enfourcher selon l'une quelconque des revendications 3 à 9, dans lequel la cavité comprend ou inclut une surface latérale interne (365) agencée avec un intervalle depuis une surface de côté latérale de la partie d'actionnement.

11. Véhicule à enfourcher selon l'une quelconque des revendications 3 à 10, dans lequel la cavité comprend ou inclut :
une première surface inférieure (362) qui supporte la partie d'actionnement, et
une seconde surface inférieure (363) située sous la première surface inférieure et agencée avec un intervalle par rapport à la partie d'actionnement.
